# EUROPEAN PATENT APPLICATION

(11) **EP 1 392 001 A1**
(43) Date of publication of application: **25.02.2004**
(21) Application number: 02447160.9
(22) Date of filing: 22.08.2002
(51) Int. Cl.: H04B 3/14

(54) **Adaptive equalizer**

(71) Applicant: VRIJE UNIVERSITEIT BRUSSEL, 1050 Brussel (BE)
(72) Inventor: Kuijk, Maarten, 2600 Berchem - Antwerpen (BE)
(74) Representative: Van Malderen, Joelle

(57) **Abstract**

The present invention is related to an adaptive equalizer comprising:
- an equalizer filter (32) for filtering a distorted signal from a communication channel, having a data input (30) for receiving said distorted signal, a feedback signal input for a feedback control signal, and which generates an output signal at an output node (35) ;
- circuitry (46) for processing said output signal and generating said feedback control signal, the circuitry comprising
   o a first means (38) for measuring a short-term-amplitude signal of said output signal,
   o a second means (38) for measuring a long-term-amplitude signal of said output signal,
   o a comparator means (43) that compares said short-term-amplitude signal and said long-term-amplitude signal and that determines the evolution of said feedback control signal,
   arranged such that said distorted signal is compensated for its higher frequency attenuation in said communication channel.

## Description

### Field of the invention

The present invention relates to an adaptive line equalizer and more specifically to the related feedback control system employed to compensate for the attenuation of signals transmitted over a communication channel.

### State of the art

Adaptive equalizers generally include a variable filter, a control loop and an output reconstruction unit.

US patent 3,728,649 compares the differentiated and peak detected pulse output of a variable equalizer to an output level of a reference voltage source to produce a feedback control signal.

US patent 5,796,778 describes a circuit that has an equalizer circuit and a variable gain amplifier circuit.

US patent 5,940,442 achieves equalization by monitoring the peak-to-peak amplitude, amplitude peaks and differences between amplitude peaks of the equalized data signal during defined time intervals.

However, none of the present state-of-the-art adaptive equalizers have a satisfactory control feedback method that functions well for a large range of transmit amplitudes and of transmit data patterns. The robustness against process-parameter changes is insufficient in most proposed solutions, limiting the production yield of such circuits.

### Aims of the invention

The present invention aims to provide a novel equalizer design which provides an optimised equalisation of signals transmitted over a communication channel, and more particularly to compensate for the attenuation of said signals.

### Summary of the invention

In a first and second aspect of the present invention, a method and a circuit to generate a feedback control signal that is generated from the equalized output of the equalizer filter before it is digitised are disclosed. Depending on whether the signal has been under- or over compensated, said feedback control signal will increase or decrease, such that after reasonable time the feedback control signal will converge to a value where optimal compensation is reached. The method is applicable for equalizers that restore as well DC-balanced as DC-unbalanced data. An adaptive equalizer according to the present invention would also work for various digital transmit amplitudes. Also, the equalizer functions well for a broad range of transmitted data-patterns. In an embodiment of the present invention, burst mode operation is included. Multiple stage equalization with multiple feedback loops, in order to allow adaptive compensation for a large range of channel lengths and channel types are also disclosed.

The present invention discloses an adaptive equalizer comprising:
- an equalizer filter for filtering a distorted signal from a communication channel, having a data signal input for receiving said distorted signal, a feedback signal input for a feedback control signal, and which generates an output signal at an output node;
- circuitry for processing said output signal and generating said feedback control signal, the circuitry comprising
   o a first means for measuring a short-term-amplitude signal of said output signal,
   o a second means for measuring a long-term-amplitude signal of said output signal,
   o a comparator means that compares said short-term-amplitude signal and said long-term-amplitude signal and that determines the evolution of said feedback control signal,
arranged such that said distorted signal is compensated for its higher frequency attenuation in said communication channel.

Preferably, in such an adaptive equalizer according to the present invention, the short-term-amplitude signal of the output signal is indicative for the amplitude of the high-speed component of said output signal. The long-term-amplitude signal can be indicative for the amplitude of the output signal stripped from its possible overshoot peaks. The short-term-amplitude signal of the output signal can be generated by a circuit comprising a high-pass filter and a peak detector. The long-term-amplitude signal of the output signal can be generated by a circuit comprising a low-pass filter and a peak detector.

In a preferred embodiment, in the adaptive equalizer of the present invention, said output signal is fed to a limiting amplifier to produce a digital output signal.

In another aspect of the present invention, a multi-stage adaptive equalizer is disclosed, comprising at least a first and a second adaptive equalizers such as described higher, wherein the output signal of said first adaptive equaliser is fed to the data input node of said second adaptive equaliser.
The present invention also concerns a method for adaptively equalising a distorted signal comprising high frequency attenuation received from a communication channel, comprising the steps of:
- Filtering said distorted signal and providing an output signal at an output node,
- Comparing a short-term-amplitude signal of said output signal to a long-term-amplitude signal of said output signal to provide a feedback signal, and
- Providing a feedback signal to compensate said high frequency attenuation in said distorted signal.

In the method according the present invention, the short-term-amplitude signal of the output signal can be indicative for the amplitude of the high-speed component of the output signal. The long-term-amplitude signal can be indicative for the amplitude of the output signal stripped from its possible overshoot peaks.

### Short description of the drawings

Exemplary embodiments of the invention and of the use of the invention are shown in the drawings. The drawings are schematic representations of the invention and therefore the dimensions and the relative dimensions do not correspond to actual reductions to practice of the invention.

Fig. 1 shows the preferred embodiment of the present invention, including a high-pass filter, low-pass filter and peak detectors in control circuitry.

Fig. 2 is a schematic explanation of the operation of the control circuit, showing the conditions of under-compensation, optimal-compensation, and over-compensation.

Fig. 3 shows a preferred embodiment of the low-pass filter (a) connected to its peak detector, and the high pass-filter (b) connected to its peak-detector. Both circuits assume differential signal treatment at their input.

Fig. 4 shows signal evolutions versus time of exemplary nodes in the case that optimal compensation has been reached.

Fig. 5 shows the cascade of two adaptive equalizers each having their control feedback loop of the present invention allowing adaptation to various channel lengths and types.

### Detailed description of the invention

The invention is described in the sequel through a detailed description of several embodiments of the invention. It is obvious that other embodiments of the invention can be configured according to the knowledge of persons skilled in the art without departing form the true spirit of the invention, the invention being limited only by the terms of the appended claims. It will be clear for the person skilled in the art that the present invention is also applicable to the similar circuits that can be configured in any transistor technology, including, CMOS BICMOS and SiGe BICMOS. Also will it be clear that similar merits of the invention can be obtained when single ended signals are implemented as differential signals and vice-versa, without departing from the true spirit of the invention.

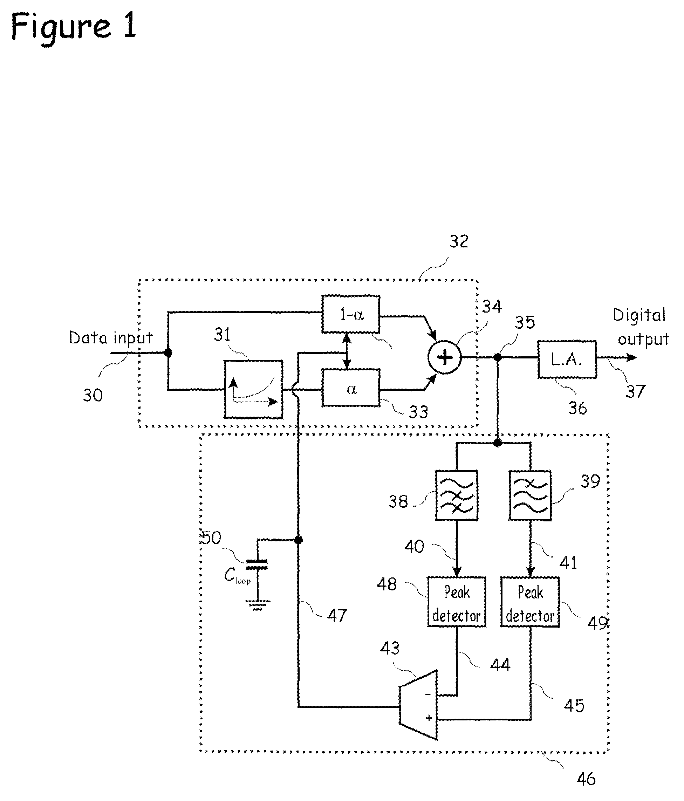

Figure 1 shows the preferred embodiment of the present invention. A digital signal that has been transmitted through a communication channel is attenuated in its higher frequency components, and enters the equalizer of the present invention on node 30 being its data input. Communication channels include twisted pair, coax-cable, and printed circuit board transmission lines, including both differential signalling as single ended signalling methods, as is understood by the person skilled in the art. Attenuation of higher frequency components can be due to several attenuation mechanisms including metal skin-effect, dielectric losses and first order attenuation including parasitic capacitances and/or inductances at Printed Circuit Board via's and connectors.

Node 30 is the input of Filter 32. Filter 32 can be any type of compensation filter that is being controlled by a feedback control signal α, on node 47 and that can be used for equalization. Many filter types in CMOS and BICMOS have been disclosed in patents and literature. Filter 32 has the intention to compensate for the frequency dependent losses that are introduced by the preceding communication channel. The feedback control signal α determines to which extent the higher frequencies will be amplified more than the lower frequencies. A typical implementation of filter 32 includes the use of a stage whereby the input signal is split into a flat response branch and a higher-frequency gain response branch including filter 31, after which, according to the feedback control signal α, more weight can be given to the one than to the other branch. With α being 0, the flat response branch is selected, with α being 1, maximum compensation is being applied. A value in-between corresponds to an intermediate compensation. Typically, a higher α corresponds to a longer transmission channel. For large compensation values, several of these filter stages can be cascaded using each the same α.

The more difficult part in adaptive equalization is to organise the feedback loop that regulates α, such that it converges essentially to its optimum value. At a too high α, over-compensation will be present, at a too low α, under-compensation occurs.

In the present invention, control feedback signal α is determined mainly relying on the equalized signal on node 35, at the output after the equalizer. This signal should not yet be clipped. Therefore care should be taken that in all circumstances the signal is still in its analogue form. Clipping can be done in a later stage, in -for example- a limiting amplifier 36. Alternatives for clipping include bit-slicing, and the use of decision feedback principles, as known by the person skilled in the art.

From the signal on node 35, a *long-term-amplitude signal* is generated that is indicative for the amplitude of the signal on node 35 when it would first be stripped from its possible overshoot peaks. A robust way to achieve this intention is by feeding the signal on node 35 into a low pass filter 39 followed by a peak detector 49. The output of this peak detector forms the long-term amplitude signal. It is present as the voltage on node 45.

Further from the signal on node 35, a *short-term-amplitude signal* is generated that is indicative for the high-speed component present in the signal on node 35. A robust way to achieve this is by feeding the signal on node 35 into a high-pass filter 38, followed also by a peak-detector 48. The output of this peak detector generates the short-term amplitude signal. It is present as the voltage on node 44.
The peak detectors 48 and 49 have a relatively long memory effect, such that they can keep their peak-value even when many consecutive same bits are passing. Their respective outputs 44 and 45 are then subtracted and determine the signal change on the loop capacitor Cₗₒₒₚ 50. In this example, the voltage on this capacitor node 47 then forms the control feedback signal that determines the amount of higher frequency gain of equalizer filter 32. In this way the negative feedback loop is closed.

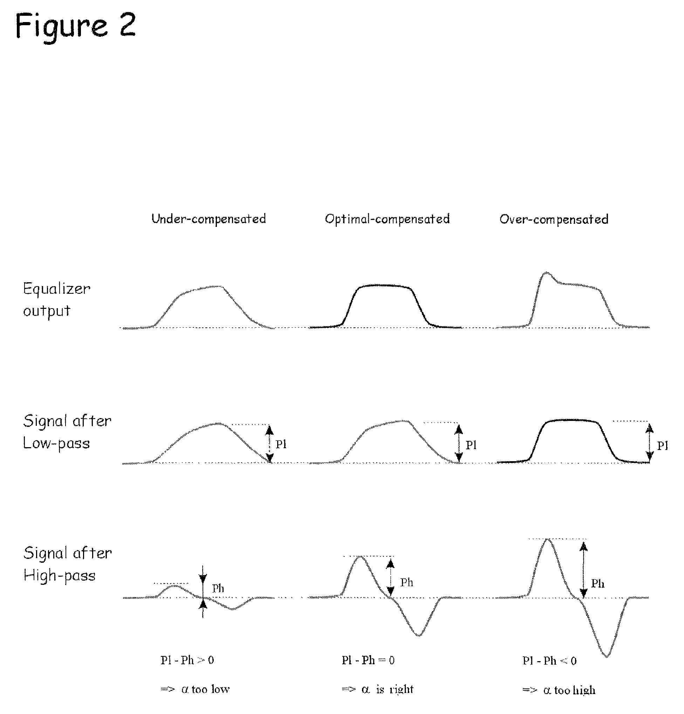

Figure 2 explains more graphically the operation principle on a bit-sequence 0110. At the left, a situation of under-compensation is assumed, at the right, over-compensation, and in the middle, the optimal-compensated state is assumed. If there is under-compensation of the higher frequencies, the peak value of the signal after high-pass Ph is smaller than the peak signal after low-pass P1. The result is that the signal after the peak detector on node 44 is lower than the signal after the peak-detector on node 45. Hence α will increase. Conversely, when there is over-compensation of the higher frequencies, the peak value Ph of the signal after high-pass will be higher than the peak signal P1 after low-pass. The result is that the signal after the peak detector on node 44 is then higher than the signal after the peak-detector on node 45. In other words, the short-term-amplitude signal is larger than the long-term amplitude signal. Hence α will decrease. The low-pass filter 39 and high-pass filter 38 are further organised such that when optimal compensation is reached, the signals on node 44 and node 45 become essentially equal.
When the transmit-amplitude is increased, both peak values will increase accordingly and in the same amount, and the system is still corresponding correctly, i.e. it will remain converging to the optimal state. For this to be true we assume that the filters behave linearly and that not any unwanted saturation effect is present in these circuits. In this way good operation is achieved independent on the transmit amplitude at the sender side. The principle remains operative for both DC-balanced and DC-unbalanced data.

The -3dB frequency for the low-pass filter 39 is preferably targeted below or at the highest frequency of the incoming data. For a 3.2 Gbit/s, the highest signal frequency is 1.6 GHz, and the -3dB frequency of the low-pass filter is suggested to be chosen at or below 1.6 GHz. E.g., 1-GHz is a nice target in this case. The exact value is not so important, since the peak detector 49 will settle on longer strings of consecutive same symbols when this frequency-value is lower. Important here is that overshoots that are occurring when having over-compensation are essentially filtered out by the low-pass filter.

The -3dB frequency of the high-pass filter 38 should be targeted preferably below the highest expected signal frequency. For 3.2 Gbit/s, also 1 GHz is a good value. It can be shown that, in this way the peak amplitude that is monitored by the peak detector depends less on the precise -3dB frequency position, and more on the resistor values in the filter. Fortunately, these resistor values change in the same way as the resistor values of the low-pass filter 39 change, assuming that the resistors in filters 38 and 39 are of the same type and are as such depending simultaneously on process fluctuations. In this way the state to which the feedback loop converges becomes relative independent on changes in process parameters of capacitors and resistors.

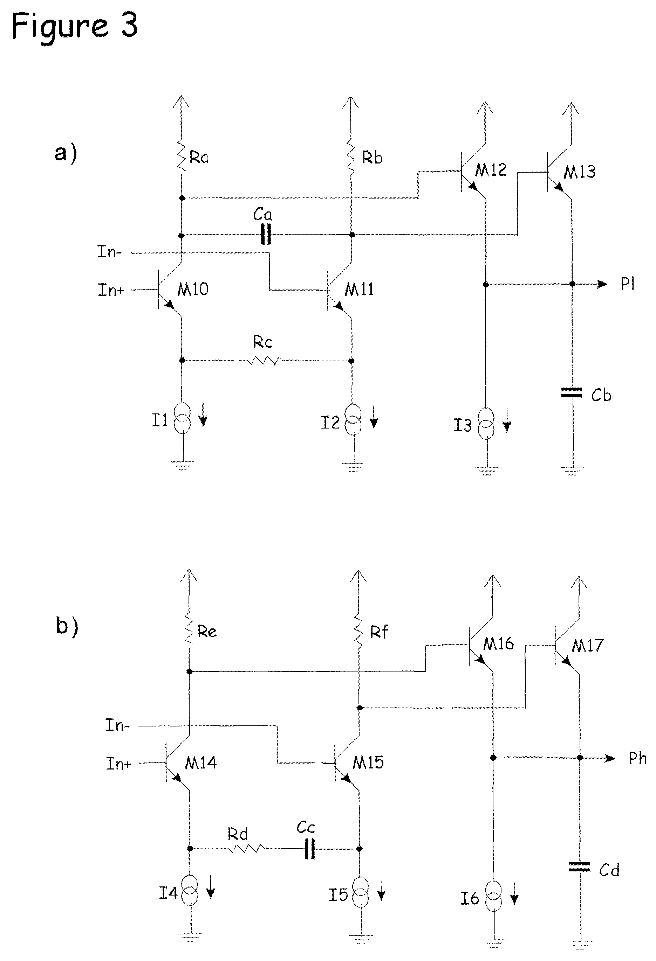

Figure 3 shows circuits that perform these low- and high-pass functions together with their peak detector circuits in the case of differential input signals. The person skilled in the art can recognize a first order low-pass filter in figure 3 a, followed by a peak-detecting circuit. The low-pass filter includes transistors M10, M11, resistors Ra, Rb & Rc, capacitor Ca and current sources I1 and I2. It is preferably made symmetric, as is understood by the person skilled in the art. The outputs of the filter are coupled to two emitter-followers M12 and M13 that operate as peak detectors. For this to be true, current source I3 needs to sink only a small current such that capacitor Cb will hold the peak value during a large multitude of bit-times. Due to the emitter followers a shift of approximately 800 mV will be present between the peak values on the output nodes and on the value P1 at the output of the peak detector. This is not a concern assuming the high-pass filter in the lower part of the figure is designed very similar and with similar values as the low-pass filter. Both will then show the same voltage drop of 800 mV and this will cancel out at the comparator.

The high-pass filter with connected peak detector in figure 3b is very similar to the low-pass filter. All values of current-sources and resistors can be very much the same. Only the position and the value of the capacitor Cc, and Ca are different. The person skilled in the art can easily calculate, design and simulate which values all components optimally have, depending on the specification of its circuits. Hereby, care should be taken that convergence to essentially the optimal compensation situation is reached.

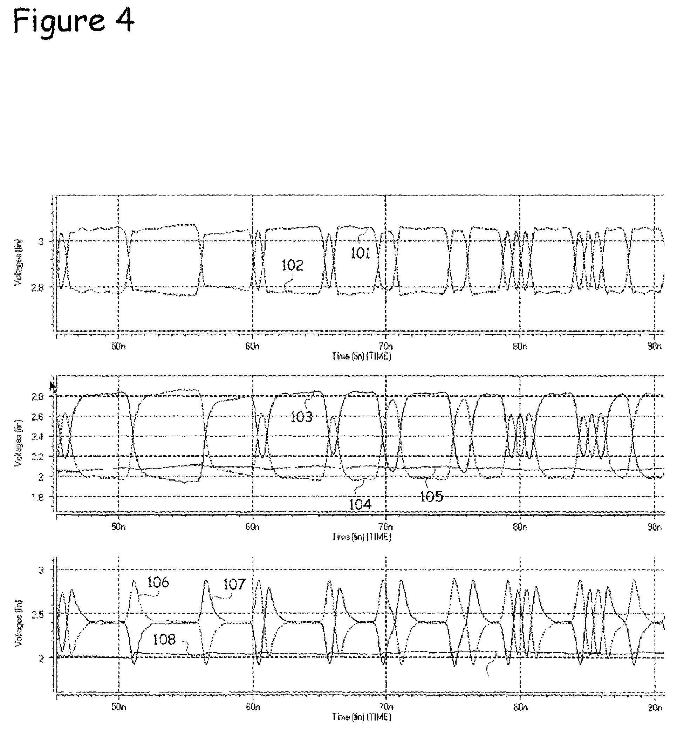

Figure 4 shows the associated signal evolution of the filtering operation when having reached convergence to optimal compensation. Curves 101 and 102 represent a differential input signal that will be the input for the two filters. Curves 103 and 104 represent the resultant differential output signal (on differential node 41) after the low-pass filter. The highest frequency oscillations (e.g. at about 80 ns) are somewhat attenuated. The peak value is at about 2.85 Volt and is tracked by the peak detector signal, offset by 800 mV, giving curve 105. The voltage value after the peak detector is about 2.05 volt.

Curves 106 and 107 represent the differential output signal (on differential node 40) after the high-pass filter. The peak values at 2.85 Volt are followed by the peak detector signal, offset by 800 mV, giving curve 108, also at 2.05 volt.

When not being at the point of optimal compensation, it is clear that the relative voltages of the peak detector outputs will change. In the over-compensation case, the peaks in the curves 106 and 107 will become higher, such that curve 108 will be at a higher voltage as well. In the under-compensation case, the peaks in the curves 106 and 107 will become lower, such that curve 108 will consequently evolve to a lower voltage.

When envisaging operation whereby very long strings of consecutive same symbols are present in the data stream, it is advised to detect that this is occuring, and then inhibit the loop capacitor Cₗₒₒₚ 50 to change voltage. This can easily be achieved, by putting a switch in-between the output of OTA 43 and said capacitor 50. To determine when such long strings are passing is known by the person skilled in the art. By inhibiting the updating of the voltage on capacitor Cₗₒₒₚ 50, the equalizer becomes ready for burst-mode operation.

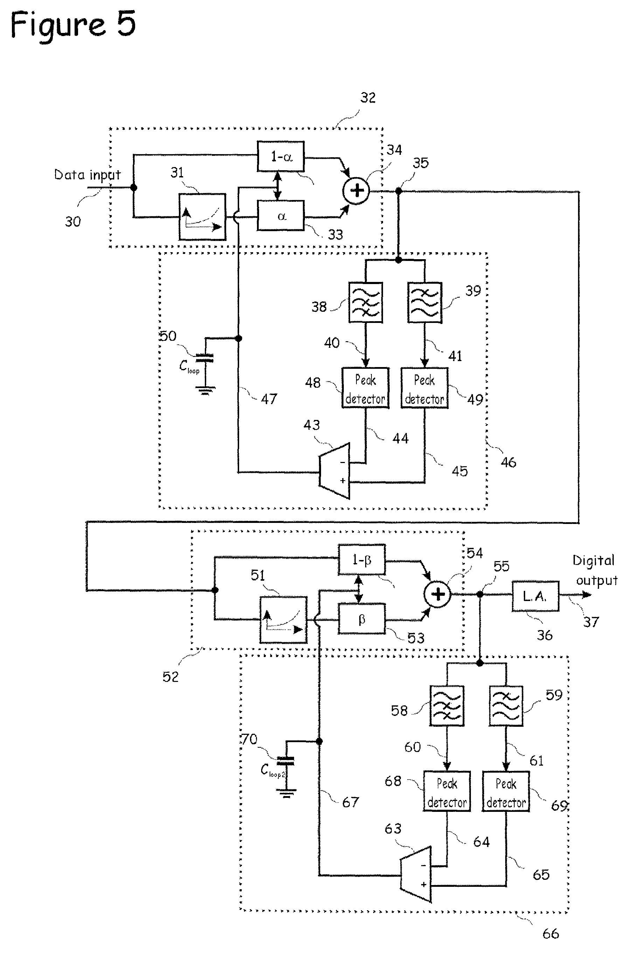

The attenuation behaviour versus frequency in a communication channel for a given channel length depends largely on the mechanisms that form the basis for the attenuation. E.g. attenuation due to skin effect will be clearly less steep than attenuation due to dielectric losses or due to parasitic capacitance or inductance. When having only a one parameter adaptive equalizer, one has to assume a given attenuation behaviour for the design of the filter 31. However, with the findings of the present invention, it finally becomes possible to make a two-parameter adaptive equalizer. This is disclosed in figure 5. Two similar stages present in Figure 1 are connected in series, each of the stages having their own feedback loop. Preferably, the first stage regulates slower transitions, e.g. for sequences with multiple consecutive same bits. The -3dB transition frequencies in the filters 38 and 39, are then at a two to ten times lower frequency than when having a system based on only one control feedback loop. The -3dB frequencies of filters 58 and 59 of the second loop remain preferably targeted at the same frequency values as when having a system based on only one control feedback loop.

Example given, when targeting 3.2 Gbit/s operation, -3dB frequencies of the filters 38 and 39 can be at 400 MHz, while filters 58 and 59 can be at 1 GHz. It is advised that equalizing filter 31 would then compensate in the full frequency range, and equalizing filter 51 would compensate mainly at the higher frequencies, for this example from 500 MHz to 2 GHz.

It is also an option to design equalizing filter 31 for skin-effect losses, and equalizing filter 51 for dielectric losses and first order parasitic attenuation effects. The final digitising stage can still be of any type that would work with a one-parameter system, including a limiting amplifier as is suggested in figure 5 by block 36. It is advised not to digitise in-between the two stages of the equalizer, but only after the last stage. With such two-parameter system it is expected that a larger range of cable types and attenuation sources can be compensated, resulting in better jitter behaviour for various channel media. Possibly it can become useful to make more than two loops. Similar principles can then be used as for the explained two-stage situation. Burst mode operation can also become possible on multiple parameter systems. The same disconnection principle can be used as for the single parameter solution explained above, however now applied to each of the control feedback loops.

## Claims

1. An adaptive equalizer comprising:
• an equalizer filter (32) for filtering a distorted signal from a communication channel, having a data signal input (30) for receiving said distorted signal, a feedback signal input for a feedback control signal, and which generates an output signal at an output node (35);
• circuitry (46) for processing said output signal and generating said feedback control signal, the circuitry comprising
o a first means (38) for measuring a short-term-amplitude signal of said output signal,
o a second means (38) for measuring a long-term-amplitude signal of said output signal,
o a comparator means (43) that compares said short-term-amplitude signal and said long-term-amplitude signal and that determines the evolution of said feedback control signal,
arranged such that said distorted signal is compensated for its higher frequency attenuation in said communication channel.

2. An adaptive equalizer such as in claim 1, wherein the short-term-amplitude signal of the output signal is indicative for the amplitude of the high-speed component of said output signal.

3. An adaptive equalizer such as in claim 1 or 2, wherein the long-term-amplitude signal is indicative for the amplitude of the output signal stripped from its possible overshoot peaks.

4. An adaptive equalizer such as in any of the claims 1 to 3, wherein the short-term-amplitude signal of the output signal is generated by a circuit comprising a high-pass filter and a peak detector.

5. An adaptive equalizer such as in any of the claims 1 to 4, wherein the long-term-amplitude signal of the output signal is generated by a circuit comprising a low-pass filter and a peak detector.

6. An adaptive equalizer such as in any of the claims 1 to 5, wherein said output signal is fed to a limiting amplifier (36) to produce a digital output signal.

7. An multi-stage adaptive equalizer comprising at least a first and a second adaptive equalizers such as in any of the claims 1-5, wherein the output signal of said first adaptive equaliser is fed to the data input node of said second adaptive equaliser.

8. A method for adaptively equalising a distorted signal comprising high frequency attenuation received from a communication channel, comprising the steps of:
• Filtering said distorted signal and providing an output signal at an output node,
• Comparing a short-term-amplitude signal of said output signal to a long-term-amplitude signal of said output signal to provide a feedback signal, and
• Providing a feedback signal to compensate said high frequency attenuation in said distorted signal.

9. The method as in claim 8, wherein the short-term-amplitude signal of the output signal is indicative for the amplitude of the high-speed component of the output signal.

10. The method as in claim 8 or 9, wherein the long-term-amplitude signal is indicative for the amplitude of the output signal stripped from its possible overshoot peaks.
